# EUROPEAN PATENT SPECIFICATION

(11) **EP 1 299 244 B1**
(45) Date of publication and mention of the grant of the patent: **06.10.2004**
(21) Application number: 01956491.3
(22) Date of filing: 21.06.2001
(51) Int. Cl.: B41M 5/00, C09C 1/36, C09C 1/30, C09C 1/40

(54) **AQUEOUS NANOPARTICLE CERAMIC AGGLOMERATE DISPERSION FOR FORMING INK-ABSORBING LAYER OF INK-JET RECORDING MEDIUM**
WÄSSRIGE NANOPARTIKULARE KERAMIK DISPERSION FÜR TINTENEMPFANGSCHICHT EINES INKJET-AUFZEICHUNGSMATERIALES
DISPERSION AQUEUSE D'AGGLOMERE CERAMIQUE DE NANOPARTICULES DESTINEE A FORMER UNE COUCHE D'ABSORPTION D'ENCRE D'UN SUPPORT D'ENREGISTREMENT A JET D'ENCRE

(30) Priority: 03.07.2000 JP 2000200794
(43) Date of publication of application: 09.04.2003
(73) Proprietor: Degussa AG, 40474 Düsseldorf (DE)
(72) Inventor: MUROTA, Masamichi, Yokkaichi City, Mie Japan (JP); SHIRONO, Hirokuni, Yokkaichi City, Mie (JP); ARAI, Masahide, 201 Chofu City, Tokyo (JP)
(86) International application number: PCT/EP2001/007015
(87) International publication number: WO 2002/002347

(56) References cited:
- EP-A- 0 450 540
- EP-A- 0 732 219
- EP-A- 0 803 374
- EP-A- 0 850 777
- EP-A- 0 972 650
- DE-A- 19 534 327
- US-A- 4 775 520
- DATABASE WPI Section Ch, Week 198814 Derwent Publications Ltd., London, GB; Class A60, AN 1988-094943 XP002181439 & JP 63 045123 A (ISHIHARA SANGYO KAISHA LTD), 26 February 1988 (1988-02-26)

## Description

### BACKGROUND OF THE INVENTION

### Field of the Invention

It is known to use pyrogenically produced silica as supplemental pigment in order to produce a coating layer for ink-jet recording mediums (DE 195 34 327 A1).

Furtheron it is known to prepare an ink-jet recording material by coating the substrate with a coating liquid prepared by pulverize-dispersing agglomerate pigment particles in a cationic resin-containing liquid (EP 0 850 777 A2).

Futheron it is known to use SiO₂ particles as sorption material in chromatrography. The SiO₂ particles are made by hydrolytic polycondensation of tetralakoxysilanes (US 4,775,520).

Furtheron it is known to produce an ink-jet receptive recording media using an aluminiumoxide particulate (EP 0 972 650 A1).

Furtheron it is known to produce an ink-jet recording medium which comprises a substrate and a pigment layer. The pigment layer comprises an upper layer and lower layer. The upper layer contains as a major pigment an aluminium oxide (EP 0 450 541 A1).

It is further known to produce a printing medium, which comprises a liquid-adsorbent base material, an ink-jet receiving layer provided on the base material, which comprises a pigment, a binder and cationic substance and a surface layer provided on the ink-receiving layer compose of cationic ultra fine particles as inorganic particles (EP 0 732 219 A2).

It is known to produce an ink-jet reactor material with an ink-receiving layer which includes a secondary particle having an average size of 10 to 300 nm and including a plurality of primary particles of silica and/or alumina silicate (EP 0 803 374 A3).

Furtheron it is known to produce TiO₂ particles by reacting ilmenite and H₂SO₄. These TiO₂ particles can be used as filler (Derwent -WPI; KN;1983-094943 (JP(A) 63045123).

Subject of the invention is an aqueous nanoparticle ceramic agglomerate dispersion, for forming an ink-absorbing.layer of an ink-jet recording medium, comprising:
- a nanoparticle ceramic agglomerate obtainable by gas-phase hydrolysis in a burner containing hydrogen and oxygen using SiCl₄, AlCl₃ orTiCl₄ as raw materials dispersed in deionized water;
- wherein the nanoparticle ceramic agglomerate has an average diameter of 0.05 to 0.3 µm at a viscosity suitable for coating of 10 to 200 mPa·s as measured by a laser diffraction particle size distribution measurement apparatus, and
- the ratio of the peak width at a height which is half the maximum height in a size distribution curve of the nanoparticle ceramic agglomerate, determined according to the results of the measurement, to the maximum height is 0.7 or less.

1. The present invention relates to an aqueous nanoparticle ceramic agglomerate dispersion which is suitable for ink-absorbing layers on ink-jet recording media and which facilitates printing of sharp and clear images on the ink-jet recording media.

### 2. Description of the Related Art

A typical conventional ink-jet recording medium includes a substrate having a thickness of 100 to 300 µm, such as paper or a polyethylene film, an ink-absorbing layer having a thickness of 30 to 200 µm formed thereon by coating, and a protective layer having a thickness of 1 to 10 µm composed of a water-soluble resin or the like, which is formed on the ink-absorbing layer by spraying.

In general, the ink-absorbing layer of the ink-jet recording medium is formed as follows. Nanoparticle ceramic agglomerates, such as a powdered silicon oxide (hereinafter referred to as SiO₂) agglomerate and a powdered aluminum oxide (hereinafter referred to as Al₂O₃) agglomerate are added to deionized water to form an aqueous nanoparticle ceramic agglomerate dispersion so that the dispersion has a viscosity suitable for coating of 10 to 200 mPa·s. To the dispersion, for example, a cationic polymer, ethanol, propanol, ethyl acetate, polyvinyl alcohol, and boric acid are added to prepare a coating. The coating is applied onto the substrate surface and is dried.

The above raw materials used for the aqueous nanoparticle ceramic agglomerate dispersion are generally prepared by a vapor phase synthetic method using SiCl₄ and AlCl₃ in the presence of hydrogen and oxygen, for example, from a burner. The resulting nanoparticle ceramic powder has an extremely small average diameter of 7 to 40 nm. Thus, ceramic particles inevitably interact with each other and readily agglomerate. Even when this nanoparticle ceramic powder is added to deionized water after disintegration in a ball mill, the nanoparticle ceramic powder is present as a ceramic powder agglomerate having an average diameter of 1 to 30 µm.

In the printing of images onto the ink-jet recording medium, fine ink droplets discharged through dot nozzles of an ink-jet printer are absorbed into the ink-absorbing layer. In color printing, such a process is repeated several times using inks of different colors.

With trends toward higher performance in ink-jet printers, the size of the ink droplets discharged from the ink-jet printers has been reduced to 20 µm or less. When this ink is discharged onto the above conventional ink-jet recording medium, the ink droplets flow locally in the ink-absorbing layer and result in bleeding. As a result, printed images are not clear, regardless of how ultrafine the ink droplets are.

### SUMMARY OF THE INVENTION

It is an object of the present invention to provide an aqueous nanoparticle ceramic agglomerate dispersion which is suitable for ink-absorbing layers on ink-jet recording media and which facilitates printing of sharp and clear images onto the ink-jet recording media.

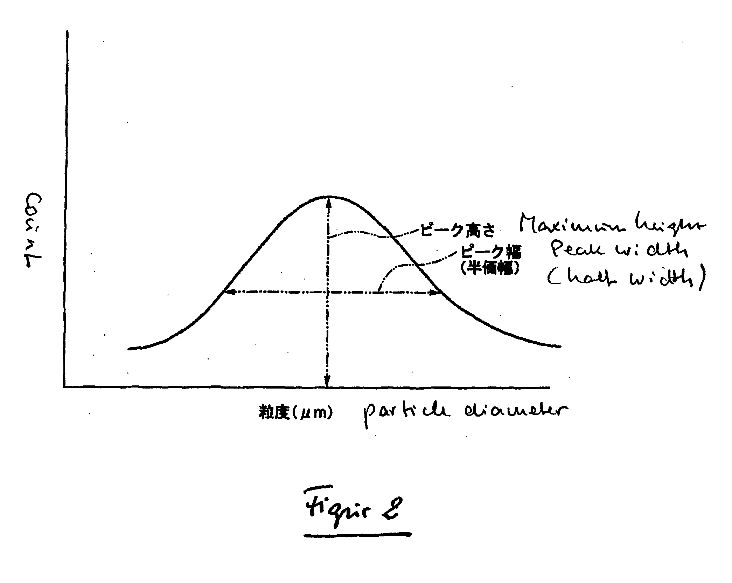

The present inventors have researched aqueous nanoparticle ceramic agglomerate dispersions for ink-absorbing layers so that the ink-absorbing layer can hold ultrafine ink droplets discharged from an ink-jet printer at the discharged positions, and have reached the following conclusions.
a) In a conventional aqueous nanoparticle ceramic agglomerate dispersion, the nanoparticle ceramic agglomerate has an average diameter of 1 to 30 µm according to measurements by a laser diffraction particle size distribution measurement apparatus. The size distribution curve determined according to the results of the measurement is shown in Fig. 2. The ratio of the peak width at a position having a height which is half the maximum height of the curve (hereinafter referred to as the half width) to the maximum height is 1 to 1.5. Such a ratio indicates that the nanoparticle. ceramic agglomerate is relatively rough and sizes thereof are not uniform. That is, the size uniformity of the agglomerates is inadequate. In an auxiliary insulating layer containing such nanoparticle ceramic agglomerates having a broad size distribution, larger agglomerates on the ink-absorbing layer absorb many ultrafine ink droplets. That is, the ultrafine ink droplets cannot be held at discharged positions, and bleed from the discharged positions.
b) The above conventional aqueous nanoparticle ceramic agglomerate dispersion is generally prepared by dispersing 1 to 50% of nanoparticle ceramic-agglomerate into deionized water using a conventional mixer. When this dispersion is treated using a conventional ultrasonic homogenizer for a predetermined time, or using a jet-mill apparatus for a predetermined time in which ultrahigh-pressure counter jet streams of the dispersion collide with each other, the nanoparticle ceramic agglomerates are rapidly disintegrated in the aqueous medium. When the nanoparticle ceramic agglomerate satisfies the following conditions by controlling the treatment time, the resulting nanoparticle ceramic agglomerates in the dispersion have a relatively small and uniform size, an ink-absorbing layer containing this aqueous nanoparticle ceramic agglomerate dispersion can hold fine ink droplets at discharged positions, without bleeding, and an image printed on an ink-jet recording medium is significantly sharp and clear. That is, the conditions are:

The average diameter of the nanoparticle ceramic agglomerate dispersed in deionized water is 0.05 to 0.3 µm according to measurements at a viscosity suitable for coating of 10 to 200 mPa·s using a laser diffraction particle size distribution measurement apparatus, and the ratio of the peak width (half width) at a position having a height which is half the maximum height of a curve shown in Fig. 2 of the particle size distribution determined according to,the results of the measurement to the maximum height is 0.7 or less.

Accordingly an aqueous nanoparticle ceramic agglomerate dispersion in accordance with the present invention, for forming an ink-absorbing layer of an ink-jet recording medium, comprises a nanoparticle ceramic agglomerate dispersed in deionized water, wherein the nanoparticle ceramic agglomerate has an average diameter of 0.05 to 0.3 µm at a viscosity suitable for coating of 10 to 200 mPa·s as measured by a laser diffraction particle size distribution measurement apparatus, and the ratio of the peak width at a height which is half the maximum height 'in a size distribution curve of the nanoparticle ceramic agglomerate, determined according to the results of the measurement, to the maximum height is 0.7 or less.

### BRIEF DESCRIPTION OF THE DRAWINGS

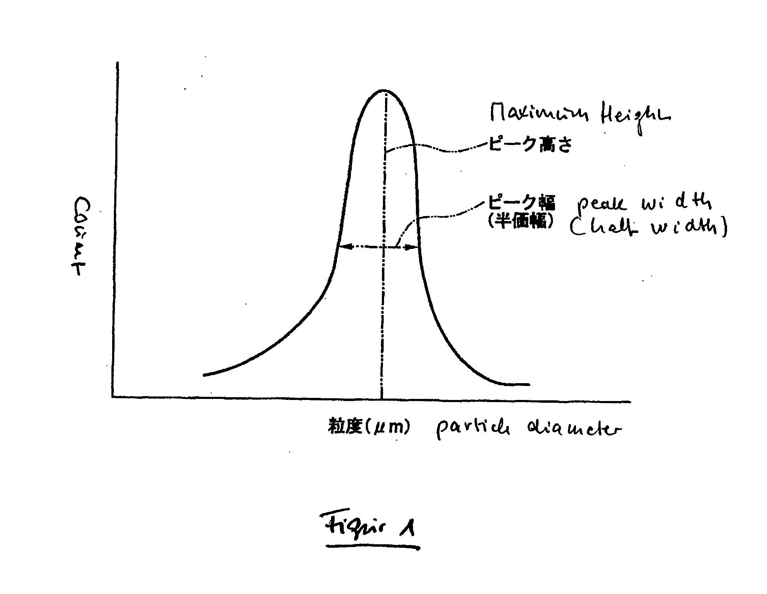

Fig. 1 is a size distribution curve of ceramic agglomerates in an aqueous nanoparticle ceramic agglomerate dispersion in accordance with the present invention; and
Fig. 2 is a size distribution curve of ceramic agglomerates in a conventional nanoparticle ceramic agglomerate dispersion.

### DESCRIPTION OF THE PREFERRED EMBODIMENTS

In the present invention, the average diameter of the nanoparticle ceramic agglomerate is in a range of 0.05 to 0.3 µm. At an average diameter less than 0.05 µm, there are no longer distinct differences in the quality of printed images. At a diameter exceeding 0.3 µm, some fine ink droplets of different colors having diameters of 20 µm or less are absorbed in the same nanoparticle ceramic agglomerate, resulting in ink bleeding. Thus, the resulting images are not clear.

The ratio of the half width in the size distribution curve of the nanoparticle ceramic agglomerate to the maximum height is in a range of 0.7 or less. At a half width exceeding 0.7, many ceramic agglomerates having diameters which significantly deviate from the average diameter are present. When an ink-absorbing layer contains these ceramic agglomerates, each of the relatively large agglomerates will absorb different types of color inks, resulting in ink bleeding. As a result, the printed image exhibits color irregularities.

The viscosity suitable for coating of the aqueous nanoparticle ceramic agglomerate dispersion is in a range of 10 to 200 mPa·s. At a viscosity of less than 10 mPa·s, the dispersion is not held on the substrate. At a viscosity exceeding 200 mPa·s, the dispersion cannot be uniformly applied on the substrate.

The aqueous nanoparticle ceramic agglomerate dispersion in accordance with the present invention will now be described with reference to the following Examples.

Using SiCl₄, AlCl₃, or TiCl₄ as raw materials, nanoparticle SiO₂ powder, nanoparticle Al₂O₃ powder, and nanoparticle TiO₂ powder, each having a number average primary particle diameter (hereinafter termed average particle diameter) shown in Table 1, were prepared by gas-phase hydrolysis in a burner containing hydrogen and oxygen. Since these nanoparticle ceramic powders were present as agglomerates, they were disintegrated in a conventional dry disintegrator for a predetermined time, and were added to deionized water in a bead mill while stirring to prepare conventional aqueous nanoparticle ceramic agglomerate dispersions (hereinafter termed aqueous ceramic dispersion) 1 to 15, each having a viscosity shown in Table 1.

Each of these aqueous nanoparticle ceramic agglomerate dispersions 1 to 15 was treated in a jet-mill apparatus in which counter jet streams of the dispersion collided with each other at a jet-stream radius of 0.1 mm at the collision position, a jet-stream velocity of 600 m/sec and a flow rate of the jet streams at the nozzles of 15 liter/min. for a predetermined time to disintegrate the nanoparticle ceramic agglomerates. In this manner, aqueous nanoparticle ceramic agglomerate dispersions 1 to 15 in accordance with the present invention (hereinafter termed aqueous ceramic dispersions of the present invention) were prepared.

After the conventional aqueous ceramic dispersions 1 to 15 and the aqueous ceramic dispersions 1 to 15 of the present invention were maintained at 22°C for 2 hours, the viscosity of each dispersion was measured at 2.5 rpm using an E-type viscometer (made by Toki Sangyo K.K.). The particle size distribution of the nanoparticle ceramic agglomerate in the dispersion was measured using a laser diffraction particle size distribution measurement apparatus, and the average agglomerate.diameter was calculated according to the results. Moreover, a size distribution curve was prepared to determine the ratio of the half width (the width at a position having a height which was half the maximum height of the curve) to the maximum height. These results are shown in Table 1.

To 1000 ml of each dispersion was added 10 to 40 g of cationic polymer, 50 to 100 ml of ethanol, 15 to 30 ml of propanol, 10 to 20 ml of ethyl acetate, 20 to 50 g of polyvinyl alcohol, and 1 to 10 g of boric acid to prepare a coating for forming an ink-absorbing layer. The coating was applied onto a recording surface of water-absorbing paper having a thickness of 200 µm, was rapidly cooled, and was dried by hot air at 50°C for 3 minutes. An ink-jet recording medium having an 80-µm thick ink-absorbing layer was thereby prepared.

Yellow, magenta, and cyan solid images were printed onto the ink-jet recording medium using an ink-jet color printer PM-3300C made by Seiko Epson Corporation, and reflection densities were measured for monochromatic light of red, green, and blue. The results are shown in Table 2.

A color image of a person having a size of 250x180 mm was printed on the ink-jet recording medium and the image quality was observed at a magnification of 3000 using a high-precision digital microscope.

**Table 1**

| Type | | Average Particle Diameter of Raw Material (nm) | Nanoparticle Ceramic Agglomerate | | | | |
|---|---|---|---|---|---|---|---|
| | | | Material | Concentration (%) | Viscosity (mPa·s) | Average Diameter (µm) | Ratio |
| Aqueous Ceramic Dispersion of Present Invention | 1 | 40 | SiO₂ | 5 | 10 | 0.06 | 0.51 |
| | 2 | 7' | SiO₂ | 30 | 30 | 0.08 | 0.55 |
| | 3 | 12 | SiO₂ | 30 | 50 | 0.10 | 0.60 |
| | 4 | 30 | SiO₂ | 50 | 100 | 0.20 | 0.62 |
| | 5 | 7 | SiO₂ | 50 | 200 | 0.29 | 0.65 |
| | 6 | 13 | Ai₂O₃ | 5 | 10 | 0.07 | 0.55 |
| | 7 | 13 | Ai₂O₃ | 20 | 30 | 0.09 | 0.57 |
| | 8 | 13 | Ai₂O₃ | 30 | 50 | 0.16 | 0.58 |
| | 9 | 10 | Ai₂O₃ | 40 | 100 | 0.20 | 0.61 |
| | 10 | 10 | Ai₂O₃ | 50 | 200 | 0.25 | 0.63 |
| | 11 | 39 | TiO₂ | 5 | 10 | 0.05 | 0.48 |
| | 12 | 21 | TiO₂ | 20 | 30 | 0.10 | 0.58 |
| | 13 | 13 | TiO₂ | 25 | 50 | 0.16 | 0.60 |
| | 14 | 21 | TiO₂ | 35 | 100 | 0.21 | 0.62 |
| | 15 | 13 | TiO₂ | 50 | 200 | 0.30 | 0.66 |
| Conventional Aqueous Ceramic Dispersion | 1 | 40 | SiO₂ | 5 | 33 | 1.50 | 1.10 |
| | 2 | 7 | SiO₂ | 30 | 95 | 3.04 | 1.02 |
| | 3 | 12 | SiO₂ | 30 | 181 | 5.20 | 1.15 |
| | 4 | 34 | SiO₂ | 50 | 335 | 10.32 | 1.32 |
| | 5 | 7 | SiO₂ | 50 | 841 | 20.45 | 1.48 |
| | 6 | 13 | Ai₂O₃ | 5 | 37 | 2.02 | 1.02 |
| | 7 | 13 | Ai₂O₃ | 20 | 97 | 5.00 | 1.11 |
| | 8 | 13 | Ai₂O₃ | 30 | 169 | 10.03 | 1.15 |
| | 9 | 10 | Ai₂O₃ | 40 | 388 | 19.12 | 1.24 |
| | 10 | 10 | Ai₂O₃ | 50 | 765 | 29.28 | 1.44 |
| | 11 | 39 | TiO₂ | 5 | 30 | 1.09 | 1.01 |
| | 12 | 21 | TiO₂ | 20 | 79 | 3.00 | 1.10 |
| | 13 | 13 | TiO₂ | 25 | 221 | 10.52 | 1.22 |
| | 14 | 21 | TiO₂ | 35 | 398 | 15.06 | 1.31 |
| | 15 | 13 | TiO₂ | 50 | 820 | 23.04 | 1.35 |

**Table 2**

| Type | | Image Density | | |
|---|---|---|---|---|
| | | Yellow | Magenta | Cyan |
| Aqueous Ceramic Dispersion of Present Invention | 1 | 2.1 | 2.1 | 2.2 |
| | 2 | 2.0 | 2.1 | 2.2 |
| | 3 | 2.1 1 | 2.1 | 2.2 |
| | 4 | 2.2 | 2.2 | 2.2 |
| | 5 | 2.0 | 2.2 | 2.3 |
| | 6 | 1.9 | 2.0 | 2.0 |
| | 7 | 1.8 | 1.9 | 1.9 |
| | 8 | 1.8 | 1.9 | 2.0 |
| | 9 | 1.7 | 1.8 | 1.8 |
| | 10 | 1.8 | 1.8 | 1.7 |
| | 11 | 1.7 | 1.9 | 1.8 |
| | 12 | 1.7 | 1.8 | 1.9 |
| | 13 | 1.8 | 1.8 | 1.8 |
| | 14 | 1.8 | 1.8 | 1.7 |
| | 15 | 1.8 | 1.7 | 1.6 |
| Conventional Aqueous Ceramic Dispersion | 1 | 1.6 | 1.8 | 1.9 |
| | 2 | 1.5 | 1.8 | 1.8 |
| | 3 | 1.4 | 1.7 | 1.8 |
| | 4 | 1.8 | 1.8 | 1.8 |
| | 5 | 1.7 | 1.7 | 1.7 |
| | 6 | 1.6 | 1.7 | 1.7 |
| | 7 | 1.6 | 1.6 | 1.6 |
| | 8 | 1.5 | 1.7 | 1.7 |
| | 9 | 1.5 | 1.7 | 1.7 |
| | 10 | 1.5 | 1.6 | 1.6 |
| | 11 | 1.6 | 1.7 | 1.7 |
| | 12 | 1.7 | 1.7 | 1.8 |
| | 13 | 1.6 | 1.6 | 1.6 |
| | 14 | 1.5 | 1.6 | 1.5 |
| | 15 | 1.4 | 1.6 | 1.5 |

The results in Table 1 demonstrate that the diameters of the agglomerates of the aqueous ceramic dispersions 1 to 15 in accordance with the present invention are smaller and more uniform than those of the conventional aqueous ceramic dispersions 1 to 15. Since the ink-absorbing layer formed of one of the aqueous ceramic dispersions 1 to 15 in accordance with the present invention contains relatively fine and uniform agglomerates, ink droplets discharged from the ink-jet printer are precisely maintained at the discharged positions. Thus, the images printed on the ink-jet recording medium have a high density and are significantly clearer.

Accordingly, the aqueous nanoparticle ceramic agglomerate dispersion in accordance with the present invention can provide an ink-jet recording medium which contributes to improvements in performance of ink-jet printers.

## Claims

1. An aqueous nanoparticle ceramic agglomerate dispersion, for forming an ink-absorbing layer of an ink-jet. recording medium, comprising:
- a nanoparticle-ceramic agglomerate obtainable by gas-phase hydrolysis in a burner containing hydrogen and oxygen using SiCl₄, AlCl₃ or TiCl₄ as raw materials dispersed in deionized water;
- wherein the nanoparticle ceramic agglomerate has an average diameter of 0.05 to 0.3 µm at a viscosity suitable for coating of 10 to 200 mPa·s as measured by a laser diffraction particle size distribution measurement apparatus, and
- the ratio of the peak width at a height which is half the maximum height in a size distribution curve of the nanoparticle ceramic agglomerate, determined according to the results of the measurement, to the maximum height is 0.7 or less.

## Patentansprüche

1. Wässrige Dispersion eines Agglomerats aus keramischen Nanopartikeln zur Bildung einer tintenabsorbierenden Schicht eines Tintenstrahl-Aufzeichnungsmediums umfassend:
- ein Agglomerat aus keramischen Nanopartikeln, das durch Gasphasen-Hydrolyse in einem Brenner enthaltend Wasserstoff und Sauerstoff unter Verwendung von SiCl₄, AlCl₃ oder TiCl₄ als Rohmaterialien erhältlich ist, dispergiert in deionisiertem Wasser;
- worin die keramischen Nanopartikel des Agglomerats einen durchschnittlichen Durchmesser von 0,05 bis 0,3 µm, wie durch einen Laser-Diffraktionsapparat zur Messung der Partikelgrößenverteilung gemessen, bei einer zum Beschichten geeigneten Viskosität von 10 bis 200 mPa·s aufweisen, und
- das Verhältnis der Peakbreite (bei einer Höhe, welche die Hälfte der maximalen Höhe darstellt) zur maximalen Höhe für eine Größenverteilungskurve der keramischen Nanopartikel des Agglomerats, die gemäß den Ergebnissen der Messung ermittelt wurde, 0,7 oder weniger beträgt.

## Revendications

1. Dispersion aqueuse d'aggloméré céramique de nanoparticules destinée à former une couche d'absorption d'encre d'un support d'enregistrement à jet d'encre comprenant :
- un aggloméré céramique de nanoparticules que l'on peut obtenir par hydrolyse en phase gazeuse dans un brûleur, contenant de l'hydrogène et de l'oxygène, utilisant SiCl₄, AlCl₃ ou TiCl₄ comme matières premières, dispersé dans de l'eau déionisée ;
**caractérisé en ce que**
- l'aggloméré céramique de nanoparticules a un diamètre moyen de 0,05 à 0,3 µm, avec une viscosité, appropriée pour l'enduction, de 10 à 200 mPa.s, tel que mesuré par un appareil de mesure de la distribution en tailles des particules par diffraction laser, et
- le rapport de la largeur du pic à une hauteur qui est la moitié de la hauteur maximale dans une courbe de distribution en tailles d'aggloméré céramique de nanoparticules, déterminée selon les résultats de la mesure, par rapport à la hauteur maximale, est égal ou inférieure à 0,7.
